# EUROPÄISCHE PATENTSCHRIFT

(11) **EP 2 802 849 B1**
(45) Veröffentlichungstag und Bekanntmachung des Hinweises auf die Patenterteilung: **30.03.2016**
(21) Anmeldenummer: 13700447.9
(22) Anmeldetag: 11.01.2013
(51) Int. Cl.: G01G 19/02, G01G 3/13

(54) **SENSORPAKET FÜR WIM SENSOR UND WIM SENSOR**
SENSOR PACKAGE FOR WIM SENSOR AND WIM SENSOR
ENSEMBLE CAPTEUR POUR CAPTEUR WIM, ET CAPTEUR WIM CORRESPONDANT

(30) Priorität: 11.01.2012 CH 472012
(43) Veröffentlichungstag der Anmeldung: 19.11.2014
(73) Patentinhaber: Kistler Holding AG, 8408 Winterthur (CH)
(72) Erfinder: CORNU, David, CH-6500 Bellinzona (CH); HOFMANN, Adrian, CH-8464 Ellikon am Rhein (CH); FREI, Peter, CH-8330 Pfäffikon ZH (CH)
(86) Internationale Anmeldenummer: PCT/CH2013/000005
(87) Internationale Veröffentlichungsnummer: WO 2013/104080

(56) Entgegenhaltungen:
- EP-A1- 0 892 259
- US-A- 5 265 481
- US-B1- 7 423 225

## Beschreibung

### Technisches Gebiet

Die Erfindung betrifft ein lang ausgestaltetes Sensorpaket für einen WIM (Weigh in Motion) Sensor umfassend eine erste Aufnahmeplatte, eine Vielzahl von Messelementen, welche gleichmässig beabstandet in einer Reihe auf der Oberseite der ersten Aufnahmeplatte angeordnet sind, eine alle Messelemente überdeckende Elektrode, eine die Elektrode vollständig überdeckende Isolation sowie eine zweite Aufnahmeplatte, welche die Isolation bedeckt, wobei jede Aufnahmeplatte aus einer Vielzahl von Aufnahmeelementen besteht, die an ihren Stirnseiten aneinander angrenzend in einer Reihe angeordnet sind.

### Stand der Technik

WIM Sensoren sind zwischen einem und mehreren Metern lange Sensoren, welche in die Strasse eingebaut werden und die dynamischen Bodenreaktionskräfte der Fahrzeuge messen, um daraus deren Gewicht zu bestimmen. Ein wesentliches Element des Sensors ist das Aluminium- Hohlprofil, in das ein Sensorpaket vorgespannt eingebaut wird. Dafür vorgesehene Halterungen des Hohlprofils unten und oben gewährleisten dabei den optimalen Kraftfluss durch das Messelement. Das Hohlprofil umfasst ein Rohrteil, welches für die Vorspannung und Abdichtung des Messelements verantwortlich ist. Ein bekanntes Hohlprofil für solche Zwecke ist beispielsweise in der EP0654654 beschrieben.

Die Sensorpakete umfassen Messelemente, welche in der Regel piezoelektrisch sind. Es sind aber auch andere Messprinzipien, wie zum Beispiel resistive, piezoresistive, kapazitive, optische oder magnetoelastische möglich. Um über die gesamte Sensorlänge messen zu können, werden die Messelemente in regelmässigen Abständen über die Sensorlänge angeordnet. Die Abstände betragen wenige Zentimeter. Ein Sensorpaket umfasst oben und unten je eine Stahl-Aufnahmeplatte, zwischen welchen eine Isolation und eine Elektroden-Folie angeordnet sind. Zwischen der Elektroden-Folie und der daran angrenzenden Aufnahmeplatte sind die Messelemente angeordnet. Aufnahmeplatten aus Stahl sind notwendig, um die benötigte Festigkeit und Ebenheit der Quarzauflage zu gewährleisten. Damit über die gesamte Länge der WIM Sensoren mit derselben Empfindlichkeit und Genauigkeit gemessen werden kann, müssen alle Messelemente genau denselben Vorspannbedingungen im Hohlprofil ausgesetzt sein. Dies bedingt eine hohe Genauigkeit bei der Fertigung der Hohlprofile, andererseits aber auch bei den Sensorpaketen, deren Dicke über die gesamte Länge innerhalb einer engen Toleranz sein muss.

Die Produktion von Stahl- Aufnahmeplatten in der gewünschten Länge von einem oder mehreren Metern und der benötigten Dicke ist höchst problematisch. Die geforderten Oberflächentoleranzen wie Ebenheit, Parallelität, Dicke, Oberflächenrauheit usw. als Quarzauflage sind nur mit einem Schleifprozess zu erreichen, der in dieser Länge nahezu unmöglich und mit riesigem Aufwand verbunden ist. Die Aufnahmeplatten neigen zu Biegung und Verwindungen.

Aus der EP 0892259 ist ein WIM Sensor bekannt, welche aus einer Vielzahl von Einzelmodulen besteht, die aneinander angereiht sind, wobei jedes Element einen Sensor enthält, der einzeln ausgelesen wird. Diese Einzelmodule sind auch einer Bodenschiene montiert. Es hat sich gezeigt, dass der Aufbau sehr aufwändig ist, da jedes Element einzeln hergestellt, vorgespannt und abgedichtet werden muss. Da die WIM Sensoren zudem den Umwelteinflüssen in der Strasse ausgesetzt sind, verliert die Abdichtung nach einer gewissen Zeit ihre Qualität, was zum Ausfall einzelner Sensoren führt.

In der US 5265481 ist ein System eines WIM Sensors mit einzelnen Elementen beschrieben, die in ein Rohr eingesetzt wurden. Es hat sich als schwierig erwiesen, sie Sensorelemente in das geschlossene Rohr einzusetzen.

### Darstellung der Erfindung

Aufgabe der vorliegenden Erfindung ist es, ein Sensorpaket eingangs beschriebener Art für solche WIM Sensoren zu beschreiben, welches die erforderliche Toleranz aufweist, jedoch kostengünstiger herstellbar ist und die genannten Nachteile überwindet. Zudem ist ein entsprechend kostengünstiger WIM Sensor anzugeben.

Die Aufgabe wird durch die Merkmale der unabhängigen Patentansprüche 1 und 9 gelöst.

In der erfindungsgemässen Ausführung sind benachbarte Aufnahmeelemente an ihren Stirnseiten durch formschlüssige Verbindungen miteinander verbunden. Dank dieser Verbindung der Aufnahmeelemente ist es möglich, das Sensorpaket in das Hohlprofil zu ziehen. Dies bedeutet wesentliche Vorteile für Handling und Montage.

Der erfindungsgemässe WIM Sensor umfasst ein erfindungsgemässes Sensorpaket. Bei der Anwendung in einer Strasse eingebaut wirkt eine Kraft von der Strassenoberfläche her senkrecht auf den WIM Sensor.

Die Aufnahmeelemente des erfindungsgemässen Sensorpakets sind entsprechend um ein Vielfaches kürzer ausgestaltet als eine einstückig ausgestaltete Aufnahmeplatte eines Sensorpakets nach dem Stand der Technik.

Diese relativ kleinen Aufnahmeelemente können mit entsprechendem Werkzeug in grossen Mengen kostengünstig hergestellt werden. Dazu werden sie in den geforderten engen Toleranzen beispielsweise feingestanzt und anschliessend in standardisierten Verfahren kostengünstig geschliffen. Eine Reihe von Aufnahmeelementen wird einfach durch ein Aneinanderreihen von Aufnahmeelementen bis zur gewünschten Länge gebildet.

Eine grosse Menge kleiner Aufnahmeelemente mit hohen Anforderungen an Ebenheit und Parallelität lässt sich viel einfacher und kostengünstiger herstellen als wenige Aufnahmeplatten von einem oder mehreren Metern Länge mit denselben Anforderungen an die Oberflächengüte. Während sich lange Aufnahmeplatten als kaum herstellbar erwiesen haben und starke Einschränkungen der Materialauswahl mit sich bringen, ist bei kurzen Aufnahmeelementen das Erreichen der hohen Anforderungen mit gewünschten Materialien wie Edelstahl problemlos möglich.

Ein weiterer grosser Vorteil der Erfindung ist die Flexibilität in der Länge des Sensors, da die nun kürzeren Aufnahmeelemente bis zur gewünschten Länge zusammengesetzt werden können. Dies reduziert die Notwendigkeit der Artikelvielfalt und vereinfacht die Montage. Zudem können WIM Sensoren verschiedener Längen gebaut werden, auch über 2m, was bisher nicht möglich war.

Weitere erfindungsgemässe Ausgestaltungen sind in den abhängigen Ansprüchen beschrieben.

### Kurze Beschreibung der Zeichnungen

Im Folgenden wird die Erfindung unter Beizug der Zeichnungen näher erklärt. Es zeigen
- Fig. 1: einen Querschnitt eines WIM Hohlprofils umfassen ein Sensorpaket;
- Fig. 2: einen Querschnitt einer Strasse mit einem darin eingebauten WIM Sensor, in perspektivischer Ansicht;
- Fig. 3: eine vergrösserte Ansicht eines Querschnitts eines Sensorpakets für einen WIM Sensor;
- Fig. 4: eine Seitenansicht eines Längsabschnittes eines erfindungsgemässen Sensorpakets nach Fig. 3;
- Fig. 5: eine Sicht von oben auf die Fläche A-A eines Längsabschnittes eines erfindungsgemässen Sensorpakets nach Fig. 3;
- Fig. 6: eine perspektivische Darstellung eines Aufnahmeelements in erfindungsgemässer Ausgestaltung.

### Wege zur Ausführung der Erfindung

Im Folgenden wird die Erfindung unter Bezugnahme auf die Figuren näher beschrieben. Dieselben Bezugszeichen verweisen stets auf dieselben Sachverhalte.

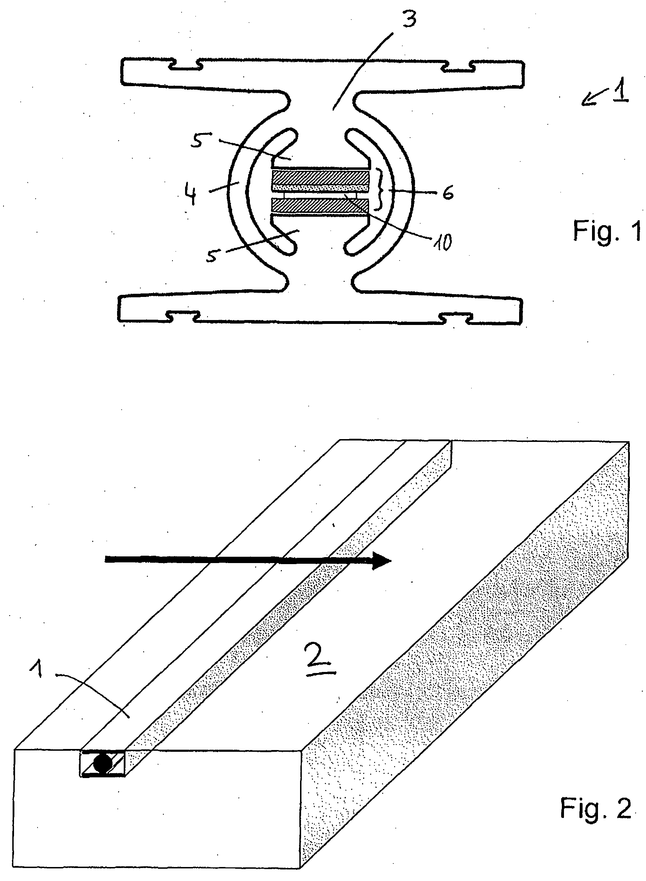

In der Fig. 1 ist ein Hohlprofil 3 eines WIM (Weigh in Motion) Sensors 1 im Querschnitt abgebildet. Höhe und Breite solcher Hohlprofile 3 sind in der Regel zwischen 30 und 70 mm, während deren hier nicht dargestellte Länge typischerweise zwischen 1m und 4m betragen. Solche Hohlprofile 3 können demnach als lang gegenüber ihrer Querschnittsausdehnungen bezeichnet werden.

Das Hohlprofil 3 umfasst mittig ein Rohr 4 sowie zwei sich darin gegenüber liegende Halterungen 5. Zwischen diesen Halterungen 5 ist ein Sensorpaket 6 flächig eingeklemmt. Das Rohr 4 sorgt für die gleichmässige Vorspannung auf das Sensorpaket 6 und für die Abdichtung des Sensorpakets 6 über die gesamte Länge des WIM Sensors 1. In der Anwendung wird eine Kraft vom Hohlprofil 3 über die äusseren, nicht benannten Platten aufgenommen und auf die Halterungen 5 in Rohr 4 übertragen. Von da aus wird die Kraft auf das als Stapel ausgestaltete Sensorpaket 6 und wirkt flächig auf alle seine Schichten, insbesondere auch über die im Sensorpaket flächig angeordneten Messelemente 10.

Fig. 2 zeigt einen Querschnitt einer Strasse 2 mit einem darin eingebauten WIM Sensor 1, in perspektivischer Ansicht. Die Oberseite des WIM Sensors 1 ist dabei bündig mit der Strassenoberfläche 2 angeordnet. Der WIM Sensor 1 ist quer zur Fahrtrichtung ausgerichtet, welche mit einem Pfeil angegeben ist, sodass Fahrzeuge den WIM Sensor 1 bei der Vorbeifahrt überqueren. Bei Bedarf sind mehrere WIM Sensoren 1 auf einer Linie angeordnet, um die gesamte Fahrbahn abzudecken. Mit den WIM Sensoren 1 kann das Gewicht von Fahrzeugen bei der Vorbeifahrt ermittelt werden. Die erfassten Daten werden in dafür vorgesehenen, nicht dargestellten Verbindungen zu Auswertestationen gebracht.

Damit das Gewicht eines Fahrzeuges stets richtig ermittelt werden kann, muss der Sensor 1 über seine gesamte Länge identisch aufgebaut sein. Insbesondere muss die Vorspannung auf das mittig eingeklemmte Sensorpaket 6 überall genau definierten Vorgaben entsprechen.

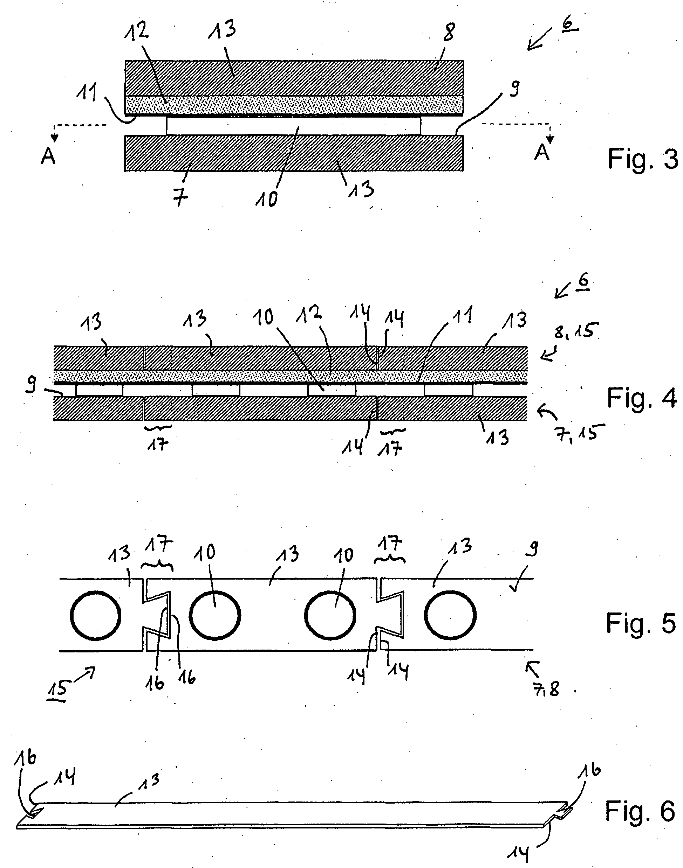

In Fig. 3 ist ein Sensorpaket 6 eines WIM Sensors 1 im Querschnitt in vergrösserter Ansicht dargestellt. Eine Seitenansicht eines Längsabschnitts eines solchen Sensorpakets 6 in erfindungsgemässer Ausführung ist in Fig. 4 dargestellt.

Das Sensorpaket 6 umfasst eine erste Aufnahmeplatte 7, auf welcher eine Vielzahl von Messelementen 10 angeordnet ist. Diese Messelemente 10 sind gleichmässig beabstandet in einer Reihe auf der Oberseite 9 der ersten Aufnahmeplatte 7 angeordnet. Diese Messelemente 10 sind direkt oder indirekt mit einer Elektrode 11 überdeckt. Diese Elektrode 11 ist wiederum vollständig mit einer Isolation 12 überdeckt, welche insbesondere als Folie oder als Schicht ausgestaltet sein kann. Eine zweite Aufnahmeplatte 8 bedeckt schliesslich die Isolation 12 direkt oder indirekt und bildet die letzte notwendige Komponente des Sensorpakets 6.

Die genannten Komponenten des Sensorpakets 6, namentlich die beiden Aufnahmeplatten 7, 8, die Messelemente 10 sowie die Elektrode 11 und die Isolation 12 sind alle plan aufeinander angeordnet auf ihren jeweiligen Oberflächen, welche hohen Qualitätsanforderungen bezüglich Planheit, Ebenheit und Rauheit genügen müssen. Durch enge Toleranzen sind jeweils geeignete Masse für die verschiedenen Oberflächengüten und/oder Dicken festgelegt.

Aus Fig. 4 geht hervor, dass jede Aufnahmeplatte 7, 8 des erfindungsgemässen Sensorpakets 6 aus einer Vielzahl von Aufnahmeelementen 13 bestehen, die an ihren Stirnseiten 14 aneinander angrenzend in einer Reihe 15 angeordnet sind. Im Unterschied zum Stand der Technik sind die Aufnahmeplatten 7, 8 demnach nicht einstückig ausgestaltet aber dennoch angrenzend aneinander. Die Reihe der Aufnahmeelemente 13 ist so lange wie die gesamte Länge des Sensorpakets 6.

Insbesondere sind alle Aufnahmeelemente 13 einer Reihe 15 identisch zueinander. Dies betrifft insbesondere die Materialwahl und die Oberflächengüte der Aufnahmeelemente 13. Die Produktionskosten senken sich aber zusätzlich noch, wenn die Aufnahmeelemente 13 auch bezüglich aller Masse identisch sind.

Vorzugsweise bestehen die Aufnahmeelemente 13 aus Edelstahl. Dieses Material ist ideal bezüglich der Härte und Festigkeit, der Eigenschaften für die Bearbeitung der Oberflächen und der Korrosionsbeständigkeit. Herkömmliche, einstückige Aufnahmeplatten 7, 8 können nicht aus Edelstahl gefertigt werden.

Die erfinderische Ausgestaltung ist in Fig. 5 dargestellt. In dieser Ausführung weisen die inneren Stirnseiten 14 der Aufnahmeelemente 13 mindestens einer Reihe Profile 16 auf, welche formschlüssig in die Profile 16 der angrenzenden Stirnseiten 14 benachbarter Aufnahmeelemente 13 eingreifen. Dadurch lassen sich formschlüssige Verbindungen 17 zwischen den Aufnahmeelementen 13 erstellen, welche die Reihe 15 von Aufnahmeelementen 13 zu einer Kette gestaltet. Dies hat den Vorteil, dass das Sensorpaket wahlweise auch zwischen die Halterungen 5 eines Hohlprofils 3 gezogen werden kann. Dazu kann am äusseren Profil 16 des vordersten Aufnahmeelements 13 eine Befestigung zum Ziehen angebracht werden.

Fig. 6 zeigt ebenso ein erfindungsgemässes Aufnahmeelement 13 in perspektivischer Ansicht, mit etwas anderen Proportionen. Auch aus dieser Figur geht hervor, dass sich mit einer Vielzahl solcher Aufnahmeelemente 13 eine Kette bilden lässt durch formschlüssige Verbindungen an den Profilen 16 der Stirnseiten 14. Auch in Fig. 4 ist mit einer gestrichelten Linie der Verbindungsbereich 17 angedeutet. Die Messelemente 10 sollten nicht in diesem Verbindungsbereich 17 angeordnet sein.

Die erfindungsgemässen Aufnahmeelemente 13 weisen vorzugsweise eine Länge von 60 bis 300 mm, insbesondere von 100 bis 150 mm, eine Breite von 5 bis 25 mm, insbesondere von 8 bis 15 mm und eine Dicke von 1 bis 6 mm, insbesondere von 2 bis 2.5 mm auf. Diese Grössen haben sich als günstig für eine einfache Produktion erwiesen. So lassen sich mehrere Messelemente 10 auf jedem Aufnahmeelement 13 anordnen, die vorzugsweise zwischen 1 und 10 cm voneinander beabstandet angeordnet sind.

Die Toleranzen der Dicke und der Parallelität aller Aufnahmeelemente 13 sind erfindungsgemäss höchstens 30 µm. Dadurch wird gewährleistet, dass die Gesamtdicke des Sensorpakets 6 den Anforderungen an die Messgenauigkeit entspricht.

Zudem sollten die Toleranzen der Ebenheit der Oberflächen der Aufnahmeelemente 13, welche Messelementen 10 zu- oder abgewandt sind, höchstens 50 µm beträgt. Die beiden inneren dieser Oberflächen sind den Messelementen 10 zugewandt und müssen deshalb sehr präzise bearbeitet werden. Die beiden aussen liegenden Oberflächen liegen im eingebauten Zustand auf den Halterungen 5 des Hohlprofils 3 auf, welche ebenfalls Ansprüche an die Ebenheit genügen müssen.

Der Wert der Rauheit der an die Messelemente 10 angrenzenden Oberflächen 9 der Aufnahmeelemente 13 beträgt erfindungsgemäss höchstens Ra 1.6. Dies ist wichtig, damit die Messelemente 10 ebenfalls eine definierte, ebene Auflage haben.

Vorzugsweise sind alle Aufnahmeelemente 13 identisch ausgestaltet. Dies betrifft sie Materialwahl die Masse sowie sämtliche Toleranzen der Oberflächen und Dicken. Dies hat den Vorteil, dass nicht zwischen Aufnahmeelementen 13 für die erste und die zweite Aufnahmeplatte 7, 8 unterschieden werden muss. Für alle Aufnahmeelemente 13 können dieselben Werkzeuge verwendet werden. Zudem können sie alle denselben Verarbeitungsprozessen unterzogen werden, um die erforderlichen Oberflächengüten zu erhalten. Erfindungsgemäss sind auch die beiden Oberflächen, auf denen die Aufnahmeelemente 13 schlussendlich aufliegen, identisch ausgestaltet. So kann verhindert werden, dass beim Zusammenbau eines erfindungsgemässen Sensorpakets 6 ein Aufnahmeelement 13 versehentlich falsch ausgerichtet verwendet wird.

Die Erfindung betrifft auch einen WIM Sensor 1 umfassend ein Hohlprofil 3 mit einem Rohr 4, in welchen zwei sich gegenüber liegende Halterungen 5 angeordnet sind, zwischen welchen ein erfindungsgemässes Sensorpaket 6 unter Vorspannung angeordnet ist. Ein solcher WIM Sensor 1 ist in Fig. 1 dargestellt, obwohl aus dieser Figur nicht ersichtlich ist, dass die Aufnahmeplatten 7, 8 aus je einer Vielzahl von Aufnahmeelementen 13 bestehen, die formschlüssig ineinander eingreifen. Solche WIM Sensoren 1 sind wesentlich kostengünstiger als herkömmliche WIM Sensoren 1, weil das darin verwendete erfindungsgemässe Sensorpaket 6 kostengünstiger ist.

### Bezugszeichenliste

- 1: WIM (Weigh in Motion) Sensor, Überfahrsensor
- 2: Strasse
- 3: Hohlprofil
- 4: Rohr
- 5: Halterung
- 6: Sensorpaket
- 7: Erste Aufnahmeplatte
- 8: Zweite Aufnahmeplatte
- 9: Oberseite der ersten Aufnahmeplatte
- 10: Messelement, Messquarz
- 11: Elektrode
- 12: Isolation
- 13: Aufnahmeelement
- 14: Stirnseite eines Aufnahmeelements
- 15: Reihe von Aufnahmeelementen
- 16: Profil einer Stirnseite für formschlüssige Verbindung
- 17: Formschlüssige Verbindung, Verbindungsbereich

## Patentansprüche

1. Lang ausgestaltetes Sensorpaket (6) für einen WIM (Weigh in Motion) Sensor (1) umfassend eine erste Aufnahmeplatte (7), eine Vielzahl von Messelementen (10), welche gleichmässig beabstandet in einer Reihe auf der Oberseite (9) der ersten Aufnahmeplatte (7) angeordnet sind, eine alle Messelemente (10) direkt oder indirekt überdeckende Elektrode (11), eine die Elektrode (11) vollständig überdeckende Isolation (12) sowie eine zweite Aufnahmeplatte (8), welche die Isolation (12) direkt oder indirekt bedeckt, wobei jede Aufnahmeplatte (7, 8) aus einer Vielzahl von Aufnahmeelementen (13) besteht, die an ihren Stirnseiten (14) aneinander angrenzend in einer Reihe (15) angeordnet sind, **dadurch gekennzeichnet, dass** die inneren Stirnseiten (14) der Aufnahmeelemente (13) mindestens einer Reihe (15) Profile (16) aufweisen, welche formschlüssig in die Profile (16) der angrenzenden Stirnseiten (14) benachbarter Aufnahmeelemente (13) eingreifen.

2. Sensorpaket nach Anspruch 1, **dadurch gekennzeichnet, dass** alle Aufnahmeelemente (13) einer Reihe (15) identisch zueinander sind.

3. Sensorpaket nach einem der vorhergehenden Ansprüche, **dadurch gekennzeichnet, dass** die Aufnahmeelemente (13) aus Edelstahl bestehen.

4. Sensorpaket nach einem der vorhergehenden Ansprüche, **dadurch gekennzeichnet, dass** die Aufnahmeelemente (13) eine Länge von 60 bis 300 mm, insbesondere von 100 bis 150 mm, eine Breite von 5 bis 25 mm, insbesondere von 8 bis 15 mm und eine Dicke von 1 bis 6 mm, insbesondere von 2 bis 2.5 mm aufweisen.

5. Sensorpaket nach einem der vorhergehenden Ansprüche, **dadurch gekennzeichnet, dass** die Toleranz der Dicke und der Parallelität aller Aufnahmeelemente (13) höchstens 30 µm ist.

6. Sensorpaket nach einem der vorhergehenden Ansprüche, **dadurch gekennzeichnet, dass** die Toleranz' der Ebenheit der Oberflächen der Aufnahmeelemente (13), welche Messelementen (10) zu- oder abgewandt sind, höchstens 50 µm beträgt.

7. Sensorpaket nach einem der vorhergehenden Ansprüche, **dadurch gekennzeichnet, dass** die Rauheit der an die Messelemente (10) angrenzenden Oberflächen der Aufnahmeelemente (13) einen Wert von höchstens Ra 1.6 hat.

8. Sensorpaket nach einem der vorhergehenden Ansprüche, **dadurch gekennzeichnet, dass** alle Aufnahmeelemente (13) identisch ausgestaltet sind.

9. WIM Sensor (1) umfassend ein Hohlprofil (3) mit einem Rohr (4) und zwei darin gegenüber liegend angeordneten Halterungen (5), zwischen welchen ein Sensorpaket (6) nach einem der vorhergehenden Ansprüche unter Vorspannung angeordnet ist.

## Claims

1. Sensor package (6) with long design for a WIM (Weigh In Motion) sensor (1) comprising a first receiving plate (7), a plurality of measuring elements (10) which are arranged equally spaced in a row on the upper side (9) of the first receiving plate (7), an electrode (11) that directly or indirectly covers all the measuring elements, an insulation (12) that completely covers the electrode (11), and a second receiving plate (8) which directly or indirectly covers the insulation (12), wherein each receiving plate (7, 8) consists of a plurality of receiving elements (13), the end faces (14) of which are juxtaposed in a row (15), **characterised in that** the inner end faces (14) of the receiving elements (13) have at least one row (15) of profiles (16) that engage in positive locking manner in the profiles (16) of the adjacent end faces (14) of adjacent receiving elements (13).

2. Sensor package according to claim 1, **characterised in that** all receiving elements (13) of a row (15) are identical to each other.

3. Sensor package according to any of the preceding claims, **characterised in that** the receiving elements (13) are made from stainless steel.

4. Sensor package according to any of the preceding claims, **characterised in that** the receiving elements (13) have a length from 60 to 300 mm, particularly 100 to 150 mm, a width from 5 to 25 mm, particularly 8 to 15 mm, and a thickness from 1 to 6 mm, particularly 2 to 2.5 mm.

5. Sensor package according to any of the preceding claims, **characterised in that** the tolerance for thickness and parallelism of all receiving elements (13) is not more than 30 µm.

6. Sensor package according to any of the preceding claims, **characterised in that** the tolerance for flatness of the surfaces of receiving elements (13), whether facing toward or away from measuring elements (10), is not more than 50 µm.

7. Sensor package according to any of the preceding claims, **characterised in that** the roughness of the surfaces of the receiving elements (13) adjacent to the measuring elements (10) has a value not exceeding Ra 1.6.

8. Sensor package according to any of the preceding claims, **characterised in that** all receiving elements (13) are of identical design.

9. WIM sensor (1) comprising a hollow profile (3) with a tube (4) and two mountings (5) disposed opposite to one another therein, between which a sensor package (6) according to any of the preceding claims is arranged under initial tension.

## Revendications

1. Paquet de capteurs (6) allongé pour un capteur WIM (Weigh in Motion) (1) comprenant une première plaque de réception (7), une pluralité d'éléments de mesure (10) agencés en étant espacés de façon régulière en une rangée sur la face supérieure (9) de la première plaque de réception (7), une électrode (11) recouvrant directement ou indirectement tous les éléments de mesure (10), une isolation (12) recouvrant entièrement l'électrode (11), ainsi qu'une deuxième plaque de réception (8) recouvrant directement ou indirectement l'isolation (12), chaque plaque de réception (7, 8) étant constituée d'une pluralité d'éléments de réception (13) juxtaposés en une rangée (15) par leurs faces frontales (14), **caractérisé en ce que** les faces frontales intérieures (14) des éléments de réception (13) comporte au moins une rangée (15) de profils (16) venant en prise par complémentarité de forme dans les profils (16) des faces frontales (14) adjacentes d'éléments de réception (13) voisins.

2. Paquet de capteurs selon la revendication 1, **caractérisé en ce que** tous les éléments de réception (13) d'une rangée (15) sont identiques entre eux.

3. Paquet de capteurs selon l'une des revendications précédentes, **caractérisé en ce que** les éléments de réception (13) sont constitués d'acier fin.

4. Paquet de capteurs selon l'une des revendications précédentes, **caractérisé en ce que** les éléments de réception (13) présentent une longueur comprise entre 60 et 300 mm, en particulier entre 100 et 150 mm, une largeur entre 5 et 25 mm, en particulier entre 8 et 15 mm, et une épaisseur entre 1 et 6 mm, en particulier entre 2 et 2,5 mm.

5. Paquet de capteurs selon l'une des revendications précédentes, **caractérisé en ce que** la marge de tolérance de l'épaisseur et du parallélisme de tous les éléments de réception (13) s'élève au maximum à 30 µm.

6. Paquet de capteurs selon l'une des revendications précédentes, **caractérisé en ce que** la marge de tolérance de la planéité des surfaces des éléments de réception (13), lesquelles sont tournées vers des éléments de mesure (10) ou détournées de ceux-ci, s'élève au maximum à 50 µm.

7. Paquet de capteurs selon l'une des revendications précédentes, **caractérisé en ce que** la rugosité des surfaces des éléments de réception (13) adjacentes aux éléments de mesure (10) présente une valeur maximale de 1,6 Ra.

8. Paquet de capteurs selon l'une des revendications précédentes, **caractérisé en ce que** tous les éléments de réception (13) sont conçus de façon identique.

9. Capteur WIM (1) comprenant un profilé creux (3) avec un conduit (4) et deux supports (5) agencés de façon opposée dans celui-ci, entre lesquels est agencé un paquet de capteurs (6) sous précontrainte selon l'une des revendications précédentes.
